# DEMANDE DE BREVET EUROPEEN

(11) **EP 3 107 359 A1**
(43) Date de publication de la demande: **21.12.2016**
(21) Numéro de dépôt: 16174953.6
(22) Date de dépôt: 17.06.2016
(51) Int. Cl.: H05K 5/00, H04M 1/02, H04B 1/38

(54) **COQUE DE PROTECTION POUR TERMINAL ÉLECTRONIQUE AVEC LECTEUR DE CARTE À PUCE INTÉGRÉ**

(30) Priorité: 19.06.2015 FR 1555624
(71) Demandeur: Coppernic, 13100 Aix-en-Provence (FR)
(72) Inventeur: PIEPERS, Marc, 13240 Septemes les Vallons (FR)
(74) Mandataire: Chevalier, Renaud Philippe

(57) **Abrégé**

Coque (1) de protection pour terminal électronique (2), comprenant un casier (3) présentant une paroi de fond (30) et une paroi périphérique (31), ladite paroi de fond recevant au moins un dispositif électronique interne intégrant au moins un appareil électronique du type lecteur de carte à puce piloté par une carte électronique, où le casier présente un orifice (34) ménagé dans sa paroi périphérique et prévu pour être positionné en regard d'un port de connexion (23) du terminal électronique, où le dispositif électronique interne intègre un organe de connexion accessible au moins en partie dans ledit orifice, et la coque comprenant un capuchon de connexion (5) amovible conformé pour être engagé de manière amovible dans ledit orifice et comportant un premier connecteur (51) prévu pour s'engager dans le port de connexion du terminal électronique et un second connecteur électriquement connecté au premier connecteur et prévu pour être électriquement connecté à l'organe de connexion, de sorte que, une fois le terminal électronique introduit dans le casier et le capuchon de connexion placé dans ledit orifice, le terminal électronique est électriquement connecté au dispositif électronique interne via le premier connecteur, le second connecteur et l'organe de connexion.

## Description

La présente invention se rapporte à une coque de protection pour terminal électronique, notamment pour téléphone mobile, tablette numérique ou assistant numérique personnel.

Elle se rapporte plus particulièrement à une coque de protection recevant au moins un dispositif électronique interne du type lecteur de carte à puce assurant une fonctionnalité électronique de lecture de carte à puce intégrée à la coque, cette fonctionnalité électronique supplémentaire venant ainsi en complément des fonctionnalités offertes par le terminal électronique, et où le terminal électronique communique avec le dispositif électronique interne.

L'invention trouve ainsi une application à une coque recevant au moins un dispositif électronique interne du type lecteur de carte à puce, comme par exemple un lecteur de carte à puce à contact simple ou dual, ou un lecteur de carte à puce sans contact pour lire sans contact (notamment en champ NFC) une carte à puce telle qu'une carte de paiement ou une carte intégrée à un terminal électronique.

Il est connu, notamment du document WO 2010/024923, un lecteur de carte comprenant un casier rigide dans lequel est glissé un téléphone portable, ce casier supportant dans son fond un connecteur mâle fixe prévu pour s'engager dans un port de connexion femelle du téléphone, permettant ainsi un échange de données entre le lecteur de carte et le téléphone.

Les documents US 2012/0327615, WO 2013/149151 et FR 2 968 433 divulguent une coque de protection intégrant un dispositif électronique interne (un dispositif de géolocalisation pour le document US 2012/0327615, un scanner de codes graphiques pour le document WO 2013/149151 et un dispositif de paiement électronique pour le document FR 2 968 433), avec un connecteur mâle fixe situé à l'intérieur de la coque et propre à assurer une connexion avec un port de connexion femelle d'un terminal électronique placé à l'intérieur de la coque, permettant ainsi de mettre en liaison le terminal électronique et le dispositif électronique interne.

Dans toutes les coques connues précitées, il est donc prévu d'employer un connecteur mâle fixe, non démontable, disposé à l'intérieur de la coque pour une connexion avec un port de connexion femelle du terminal électronique placé à l'intérieur de la coque.

Cependant, dans les documents US 2012/0327615 et WO 2013/149151, il s'avère indispensable de prévoir suffisamment de jeu entre la coque et le terminal électronique, pour que le terminal électronique puisse venir se ficher sur le connecteur fixe tout en autorisant la complète insertion du terminal électronique à l'intérieur de la coque. Une telle solution n'est pas complètement satisfaisante pour le maintien et la protection du terminal électronique.

Dans le document FR 2 968 433, il est prévu une trappe d'accès pivotante pour permettre l'insertion coulissante du terminal électronique à l'intérieur de la coque, jusqu'à sa connexion avec le connecteur fixe de la coque. Une telle solution avec trappe pivotante est complexe.

Dans le document WO 2010/024923, une fois en place, le terminal électronique n'est pas complètement enveloppé par le casier, sur son pourtour, ce casier étant ouvert pour permettre d'insérer et faire coulisser le terminal électronique jusqu'à sa connexion avec le connecteur fixe de la coque. Une telle solution n'est pas non plus satisfaisante pour le maintien et la protection du terminal électronique.

L'état de la technique peut également être illustré par l'enseignement du document CN 107 703 501 qui divulgue une coque intégrant un enregistreur, où l'enregistreur est connecté à un port du téléphone mobile afin d'être alimenté électriquement. Cependant, une telle solution est inadaptée pour un lecteur de carte à puce qui a besoin de communiquer avec le terminal électronique placé dans la coque pour échanger des données, et notamment des données sécurisées.

La présente invention a pour but de résoudre en tout ou partie les inconvénients précités, en proposant une coque de protection recevant au moins un dispositif électronique interne, qui soit de conception simple et qui offre un niveau de maintien et de protection améliorée.

A cet effet, elle propose une coque de protection pour terminal électronique, notamment pour téléphone mobile, tablette numérique ou assistant numérique personnel, du type comprenant un casier présentant une paroi de fond et une paroi périphérique formée sur le pourtour de la paroi de fond, ladite paroi de fond recevant au moins un dispositif électronique interne assurant une fonctionnalité électronique intégrée à la coque, où le dispositif électronique interne intègre au moins un appareil électronique du type lecteur de carte à puce piloté par une carte électronique, et où le casier présente un orifice ménagé dans sa paroi périphérique et prévu pour être positionné en regard d'un port de connexion du terminal électronique une fois ce terminal électronique introduit dans le casier, où le dispositif électronique interne intègre un organe de connexion raccordé à la carte électronique et accessible au moins en partie dans ledit orifice, cette coque comprenant en outre un capuchon de connexion amovible conformé pour être engagé de manière amovible dans ledit orifice, ledit capuchon de connexion comportant :
- un premier connecteur prévu pour s'engager dans le port de connexion du terminal électronique une fois ce terminal électronique introduit dans le casier et une fois ledit capuchon de connexion placé dans ledit orifice ; et
- un second connecteur électriquement connecté au premier connecteur, et prévu pour être électriquement connecté à l'organe de connexion une fois ledit capuchon de connexion placé dans ledit orifice ;
de sorte que, une fois le terminal électronique introduit dans le casier et le capuchon de connexion placé dans ledit orifice, le terminal électronique est électriquement connecté au dispositif électronique interne via le premier connecteur, le second connecteur et l'organe de connexion, pour permettre un échange de données entre la carte électronique et le terminal électronique.

Ainsi, grâce à un tel capuchon de connexion amovible pourvu d'une double connectique, autrement dit de deux connecteurs, le terminal électronique peut être inséré de manière ajustée et serrée à l'intérieur du casier, en étant entouré sur son pourtour par la paroi périphérique du casier, et le capuchon de connexion assurera la connexion entre le terminal électronique et le dispositif électronique interne.

Ainsi, l'invention propose de placer sur ce capuchon amovible le connecteur qui coopère avec le port de connexion du terminal électronique, plutôt que de le fixer à l'intérieur de la coque, offrant une liberté dans le design du casier pour garantir une protection optimale et maîtrisée du terminal électronique.

Par ailleurs, il est envisageable de remplacer le casier ou le dispositif électronique interne sans avoir à changer de capuchon de connexion, et à l'inverse de remplacer le capuchon de connexion sans avoir à remplacer le casier ou le dispositif électronique interne.

Le lecteur de carte à puce et la carte électronique sont quant à eux placés sur la paroi de fond de la coque, et l'organe de connexion assurera la connexion avec la carte électronique pour permettre l'échange de données entre la carte électronique et le terminal électronique, comme des données sécurisées, des données encryptées, des données d'authentification, des données de paiement, ...

Selon une caractéristique, le capuchon de connexion présente une forme complémentaire de celle de l'orifice pour un montage ajusté dudit capuchon de connexion à l'intérieur dudit orifice.

Selon une possibilité de l'invention, l'orifice se présente sous la forme d'un trou formé dans la paroi périphérique du casier ou d'une encoche formée dans la paroi périphérique du casier et ouverte sur un bord de ladite paroi périphérique opposé à la paroi de fond.

Avec un orifice en forme de trou, le capuchon de connexion ne peut être placé qu'après insertion complète du terminal électronique à l'intérieur du casier, tandis qu'avec un orifice en forme d'encoche, le capuchon de connexion peut être positionné directement sur le terminal électronique, et plus précisément sur son port de connexion, avant l'insertion du terminal électronique à l'intérieur du casier.

Selon une autre possibilité de l'invention, le capuchon de connexion comporte un corps supportant le premier connecteur et le second connecteur et enrobant des éléments de liaison électrique entre le premier connecteur et le second connecteur.

Dans une réalisation particulière, le corps du capuchon de connexion est réalisé dans un matériau identique au matériau constitutif du casier.

Avantageusement, l'organe de connexion comporte au moins une broche de connexion qui saille à l'intérieur de l'orifice et qui est apte à établir un contact avec le second connecteur du capuchon de connexion une fois ledit capuchon de connexion placé dans ledit orifice.

Dans un mode de réalisation particulier, le corps du capuchon de connexion présente au moins un trou positionné en face du second connecteur, ledit trou formant un passage pour une broche de connexion une fois ledit capuchon de connexion placé dans l'orifice.

Conformément à une autre caractéristique avantageuse de l'invention, la ou chaque broche de connexion de l'organe de connexion est du type broche rétractable, notamment du type lamelle ressort ou « pogo pin ».

L'invention se rapporte à un système électronique comprenant une coque conforme à l'invention, et un terminal électronique, notamment du type téléphone mobile, tablette numérique ou assistant numérique personnel, présentant un port de connexion, où ledit terminal électronique est reçu à l'intérieur du casier de la coque, et le capuchon de connexion est placé dans l'orifice de sorte que le premier connecteur est engagé dans le port de connexion du terminal électronique, et le second connecteur est électriquement connecté à l'organe de connexion, établissant une connexion électrique entre le terminal électronique et le dispositif électronique interne... comme décrit ci avant.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue schématique en perspective de dessus, d'une coque seule conforme à l'invention, avec le capuchon de connexion en place dans l'orifice du casier de la coque, où la coque intègre comme dispositif électronique interne un lecteur de carte à puce à contact dual ;
- la figure 2 est une vue schématique en perspective de dessus d'un système électronique conforme à l'invention en phase de montage, ce système électronique comprenant la coque de la figure 1 avec un terminal électronique du type téléphone mobile, où le capuchon de connexion est retiré et le terminal électronique n'est pas encore en place dans le casier de la coque ;
- la figure 3 est une vue schématique comparable à celle de la figure 2, selon un autre angle de vue, où le capuchon de connexion est engagé sur le port de connexion du terminal électronique et le terminal électronique n'est pas encore en place dans le casier de la coque ;
- la figure 4 est une vue schématique en perspective de dessus du système électronique monté, avec le terminal électronique en place dans le casier de la coque et le capuchon de connexion à la fois engagé sur le port de connexion du terminal électronique et en place dans l'orifice du casier de la coque ;
- la figure 5 est une vue schématique en perspective de dessous, de la coque visible sur les figures 1 à 4 ;
- la figure 6 est une vue schématique en perspective de dessus du système électronique de la figure 4, où le casier de la coque et le corps du capuchon de connexion ne sont pas illustrés afin de montrer les moyens internes (normalement invisibles de l'extérieur) qui permettent la connexion électrique entre le port de connexion du terminal électronique et le dispositif électronique interne de la coque ;
- la figure 7 est une vue schématique en perspective de dessous du système électronique de la figure 4, cette figure 7 étant comparable à la figure 6 avec également le casier de la coque et le corps du capuchon de connexion qui ne sont pas illustrés ;
- la figure 8 est une vue schématique en perspective de dessus, de la coque seule visible sur les figures 1 à 5, avec le capuchon de connexion absent et avec une plaque de couverture absente pour montrer le dispositif électronique interne de la coque et ses moyens de connexion avec le capuchon de connexion ;
- les figures 9a et 9b sont des vues schématiques en coupe transversale d'un système électronique conforme à l'invention, dans un plan de coupe passant par l'orifice du casier de la coque et par le capuchon de connexion, avec à chaque fois le capuchon de connexion engagé sur le port de connexion du terminal électronique et avec respectivement le terminal électronique pas encore en place dans le casier de la coque (figure 9a) et en place dans le casier (figure 9b), où le capuchon de connexion est conforme à un premier mode de réalisation ;
- les figures 10a et 10b sont des vues schématiques comparables à celles des figures 9a et 9b, où le capuchon de connexion est conforme à un deuxième mode de réalisation ; et
- les figures 11 a et 11 b sont des vues schématiques comparables à celles des figures 9a et 9b, où le capuchon de connexion est conforme à un troisième mode de réalisation.

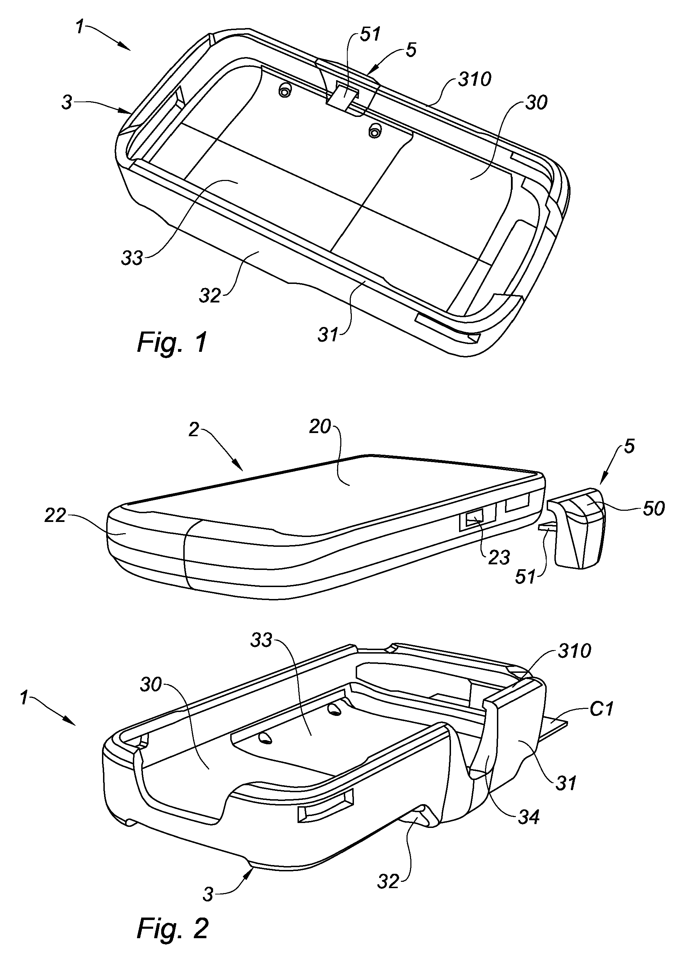

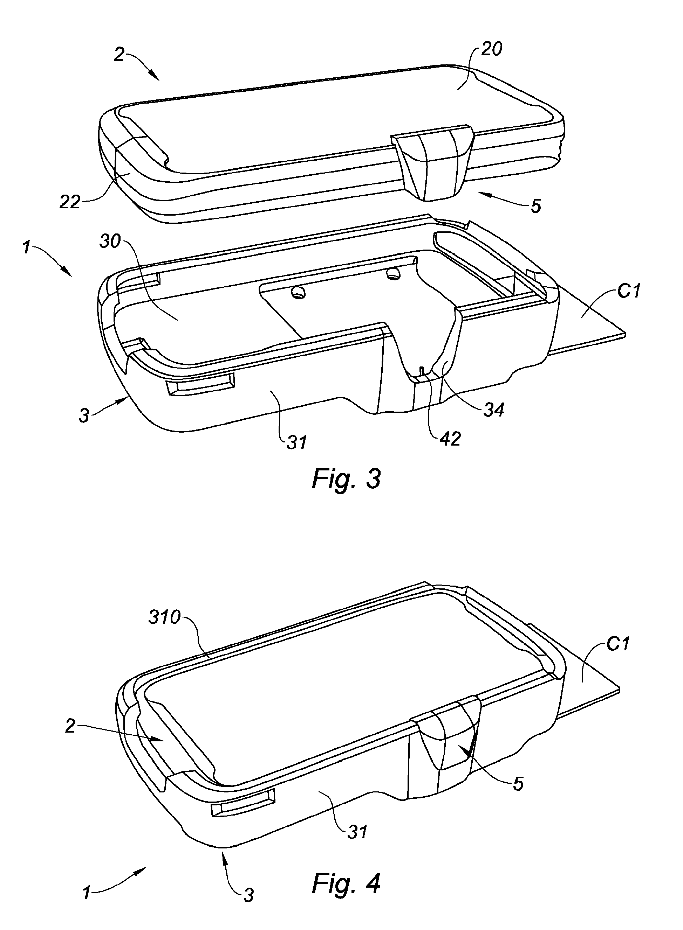

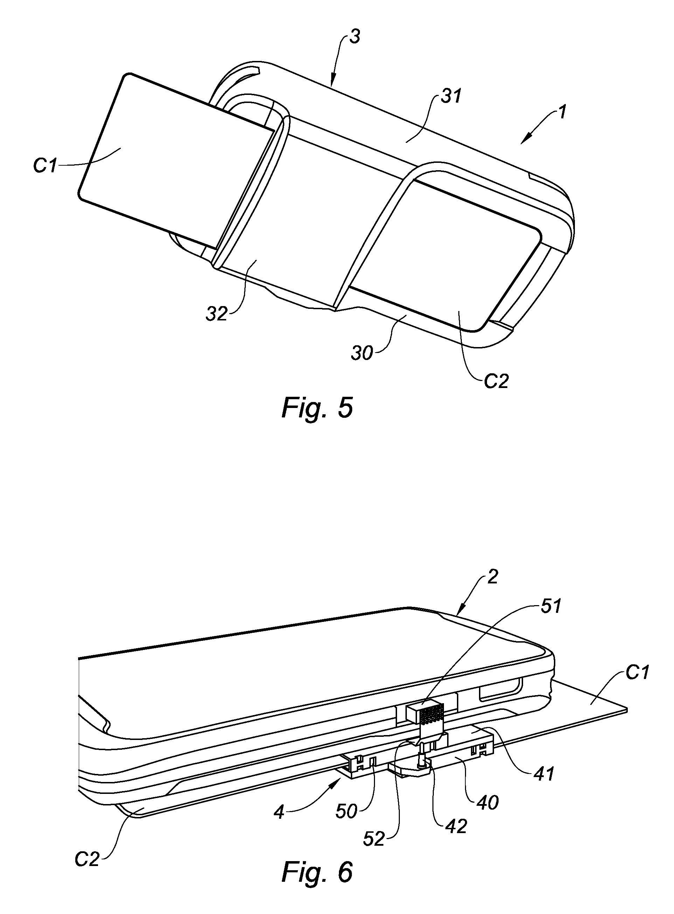

En référence aux figures 1 à 8, une coque 1 conforme à l'invention est prévue pour la protection d'un terminal électronique 2, tel qu'un téléphone mobile.

Le terminal électronique 2 comprend une façade avant 20, équipée d'un écran, tactile ou non, avec éventuellement un clavier, et une façade arrière 21 opposée, ainsi qu'une tranche périphérique 22 sur laquelle est au moins prévu un port de connexion 23 du type fiche femelle. Le port de connexion 23 est prévu sur un côté longitudinal ou bien transversal du terminal électronique 2.

La coque 1 comprend les trois éléments principaux suivants :
- un casier 3 prévu pour enserrer ou envelopper le terminal électronique 2 ;
- un dispositif électronique interne 4 assurant une fonctionnalité électronique intégrée à la coque 1 ; et
- un capuchon de connexion 5 prévu pour assurer la connexion électrique entre le dispositif électronique interne 4 et le terminal électronique 2, pour permettre une communication, voire également une alimentation électrique, entre le dispositif électronique interne 4 et le terminal électronique 2.

Le casier 3 présente une paroi de fond 30 et une paroi périphérique 31 formée sur tout le pourtour de la paroi de fond 30, de sorte que, une fois en place, la façade arrière 21 du terminal électronique 2 est plaquée contre la paroi de fond 30, et la tranche périphérique 22 du terminal électronique 2 est entourée par la paroi périphérique 31. Le casier 3 peut être réalisé dans un matériau souple ou flexible, ou dans un matériau rigide et déformable élastiquement afin de permettre l'insertion et le serrage du terminal électronique 2 à l'intérieur du casier 3.

La paroi de fond 30 présente un renfoncement 32 qui forme une bosse sur l'extérieur de la paroi de fond 30 et un creux sur l'intérieur de la paroi de fond 30, ce renfoncement 32 recevant le dispositif électronique interne 4.

Une fois le dispositif électronique interne 4 en place à l'intérieur du renfoncement 32, une plaque de couverture 33 est fixée (notamment par encliquetage ou vissage) sur la paroi de fond 30, à l'intérieur du casier 1, et recouvre le renfoncement 32 et le dispositif électronique interne 4.

En outre, le casier 3 présente un orifice 34 ménagé dans sa paroi périphérique 31 et prévu pour être positionné en regard du port de connexion 23 du terminal électronique 2 une fois ce terminal électronique 2 introduit dans le casier 3. Cet orifice 34 se présente sous la forme d'une encoche formée dans la paroi périphérique 31 du casier 3 et ouverte sur un bord 310 de la paroi périphérique 31 opposé à la paroi de fond 30.

Le dispositif électronique interne 4 intègre au moins un appareil électronique 40 du type lecteur de carte à puce piloté par une carte électronique 41, ou circuit imprimé. A titre d'exemple non limitatif, le dispositif électronique interne 4 comprend deux appareils électroniques 40 du type lecteur de carte à puce à contact, de sorte que le dispositif électronique interne 4 forme un lecteur de carte à puce à contact dual, adapté pour lire deux cartes à puces C1, C2.

Il est bien entendu envisageable de prévoir d'autres types de lecteur de carte à puce, comme par exemple un lecteur de carte à puce à contact ou un lecteur de carte à puce sans contact (par exemple en champ NFC) ; un tel lecteur de carte à puce sans contact étant prévu pour lire sans contact (notamment en champ NFC) une carte à puce telle qu'une carte de paiement ou une carte intégrée à un terminal électronique (comme par exemple un téléphone équipé d'une puce NFC).

Le ou chaque appareil électronique 40 est électriquement connecté à la carte électronique 41. La carte électronique 41 supporte au moins un organe de connexion 42 électrique constitué d'au moins une broche de connexion rétractable, notamment du type lamelle ressort ou « pogo pin ». Dans le mode de réalisation illustré sur les figures, l'organe de connexion 42 comprend une unique broche de connexion, mais il est bien entendu envisageable de prévoir plusieurs broche de connexion 42 disposées côte à côte.

L'organe de connexion 42 est électriquement connecté à la carte électronique 41, et cet organe de connexion 42 saille à travers la plaque de couverture 33, et dépasse de la plaque de couverture 33 à l'intérieur du casier 3 pour être accessible au moins en partie dans l'encoche 34.

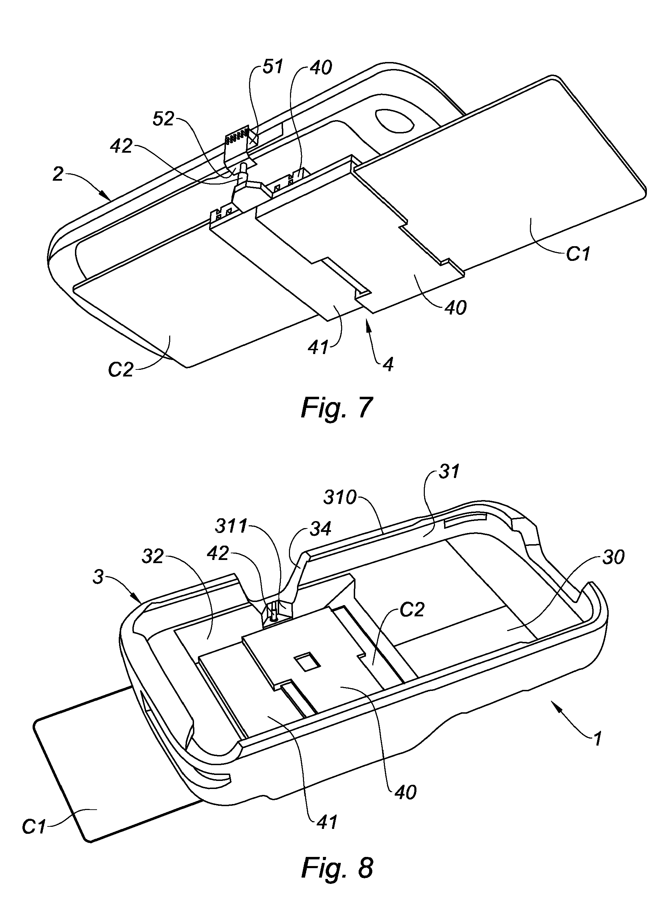

Comme visible sur la figure 8, la paroi périphérique 31 présente une zone amincie sous l'encoche 34, cette zone amincie formant une gorge 311 débouchant dans le fond de l'encoche 34, et l'organe de connexion 42 s'étend à l'intérieur de cette gorge 311. Ainsi, la ou les broches de connexion 42 saillent à l'intérieur de l'encoche 34.

Le capuchon de connexion 5 comprend un corps 50 de forme complémentaire de celle de l'encoche 34, pour un montage ajusté du corps 50 à l'intérieur de l'encoche 34 ; ce capuchon de connexion 5 étant prévu pour être monté de manière amovible à l'intérieur de l'encoche 34.

Le corps 50 peut être réalisé dans le même matériau que le casier 3, afin que la coque 1 offre un aspect uniforme.

Le capuchon de connexion 5 comprend en outre un premier connecteur 51 prévu pour s'engager dans le port de connexion 23 du terminal électronique 2. Le premier connecteur 51 est du type fiche mâle à la technologie adaptée à celle du port de connexion 23 du terminal électronique 2.

Ce premier connecteur 51 est porté par le corps 50, et est placé sur l'intérieur du corps 50 ; l'extérieur du corps 50 étant avantageusement conformé pour épouser les formes extérieures de la paroi périphérique 31 du casier 3 autour de l'encoche 34. Pour prendre en compte l'épaisseur du capuchon de connexion 5, la paroi périphérique 31 peut être bombée sur l'extérieur, au niveau de l'encoche 34.

Le capuchon de connexion 5 comprend en outre un second connecteur 52 électriquement connecté au premier connecteur 51, et prévu pour être électriquement connecté à l'organe de connexion 42 une fois le capuchon de connexion 5 placé dans l'encoche 34. Autrement dit, l'organe de connexion 42 est prévu pour établir un contact électrique avec le second connecteur 52 une fois le capuchon de connexion 5 placé dans l'encoche 34. Dans le cas où l'organe de connexion 42 intègre plusieurs broches de connexion 42, il est bien entendu prévu que chaque broche de connexion établisse un contact électrique avec le second connecteur 52.

Ce second connecteur 52 est porté par le corps 50, et les éléments de liaison électrique entre le premier connecteur 51 et le second connecteur 52 sont disposés à l'intérieur du corps 50. Le corps 50 du capuchon de connexion 5 peut présenter au moins un trou 53 positionné en face du second connecteur 52, ce trou 53 étant également positionné en face de l'organe de connexion 42 une fois le capuchon de connexion 5 placé dans l'encoche 34, de sorte que ce trou 53 forme un passage pour l'organe de connexion 42 (autrement dit pour la ou les broches de connexion).

A titre d'exemple, le capuchon de connexion 5 comprend, à l'intérieur de son corps 50, un circuit imprimé ou une carte électronique, sur lequel le premier connecteur 51 est soudé, et le second connecteur 52 est un contacteur prévu sur le circuit imprimé ou bien raccordé à ce circuit imprimé.

En situation, le capuchon de connexion 5 est d'abord branché sur le terminal électronique 2 (avec le premier connecteur 51 du capuchon de connexion 5 qui est engagé dans le port de connexion 23 du terminal électronique 2), puis le terminal électronique 2 est placé à l'intérieur du casier 3 de la coque 1 jusqu'à ce que, au final, le capuchon de connexion 5 vienne se placer dans l'encoche 34 et l'organe de connexion 42 vienne établir le contact électrique avec le second connecteur 52 du capuchon de connexion 5. Ainsi, le terminal électronique 2 est électriquement connecté au dispositif électronique interne 4 via le premier connecteur 51, le second connecteur 52 et l'organe de connexion 42, permettant ainsi un échange de données entre la carte électronique 41 et le terminal électronique 2 ; ce même terminal électronique 2 pouvant lui-même se connecter avec un service distant pour par exemple confirmer des données d'authentification ou confirmer un paiement.

En variante, le terminal électronique 2 est introduit seul dans le casier 3, puis le capuchon de connexion 5 est branché sur le terminal électronique 2 tout en s'engageant dans l'encoche 34.

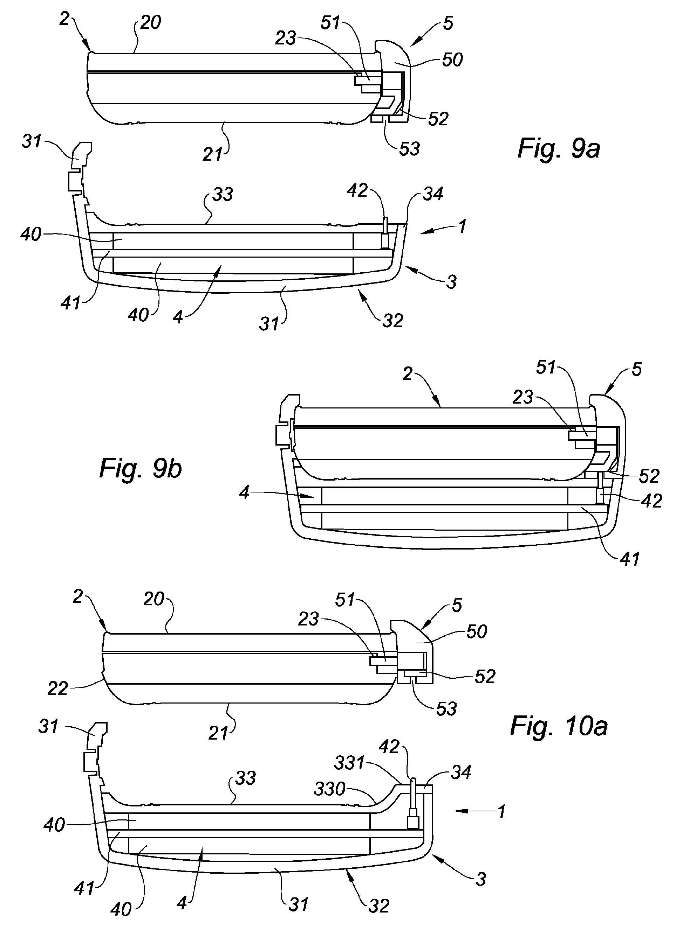

Les figures 9 à 11 distinguent trois modes de réalisation.

Dans le premier mode de réalisation des figures 9a et 9b, le capuchon de connexion 5 est quasiment aussi épais que le terminal électronique 2, la plaque de couverture 33 est substantiellement plane et le second connecteur 52 est déporté vers le bas pour se retrouver, en situation, quasiment au niveau de la façade arrière 21 du terminal électronique 2. Ainsi, le capuchon de connexion 5 présente une face interne qui vient épouser la tranche périphérique 22 du terminal électronique 2 sous le premier connecteur 51.

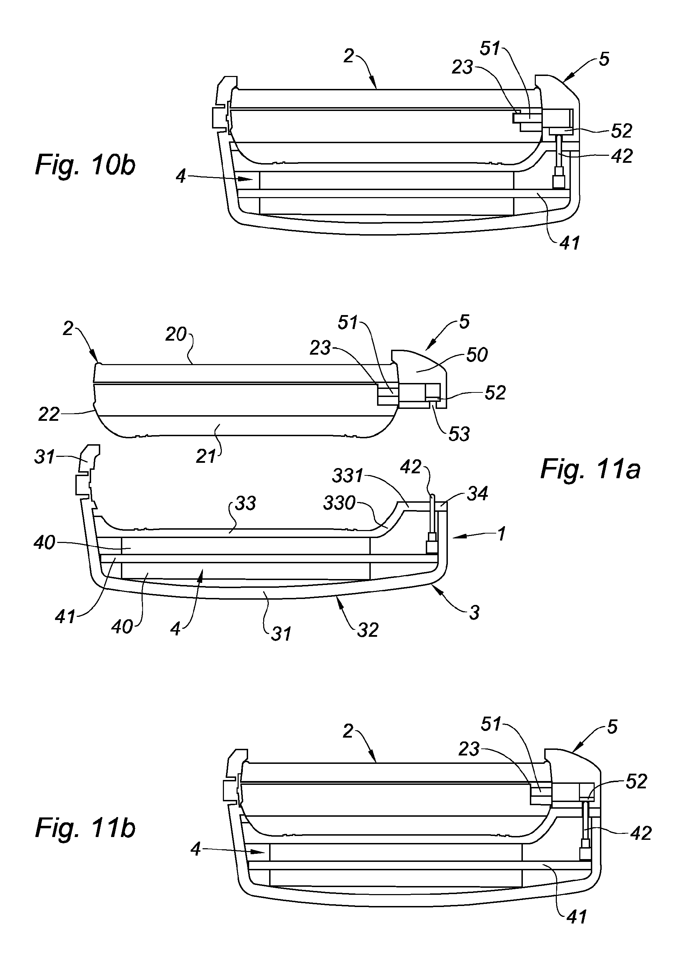

Dans le deuxième mode de réalisation des figures 10a et 10b, le capuchon de connexion 5 est moins épais que le terminal électronique 2, la plaque de couverture 33 présente un bord relevé 330 qui vient épouser la tranche périphérique 22 du terminal électronique 2 sous le premier connecteur 51, ce bord relevé 330 étant suivi d'un plateau 331 duquel dépasse l'organe de connexion 42, et le second connecteur 52 est placé sous le premier connecteur 51.

Dans le troisième mode de réalisation des figures 11 a et 11 b, le capuchon de connexion 5 est moins épais que le terminal électronique 2, la plaque de couverture 33 présente un bord relevé 330 qui vient épouser la tranche périphérique 22 du terminal électronique 2 sous le premier connecteur 51, ce bord relevé 330 étant suivi d'un plateau 331 duquel dépasse l'organe de connexion 42, et le second connecteur 52 est placé à l'arrière du premier connecteur 51.

## Revendications

1. Coque (1) de protection pour terminal électronique (2), notamment pour téléphone mobile, tablette numérique ou assistant numérique personnel, du type comprenant un casier (3) présentant une paroi de fond (30) et une paroi périphérique (31) formée sur le pourtour de la paroi de fond (30), ladite paroi de fond (30) recevant au moins un dispositif électronique interne (4) assurant une fonctionnalité électronique intégrée à la coque (1), où le dispositif électronique interne (4) intègre au moins un appareil électronique (40) du type lecteur de carte à puce piloté par une carte électronique (41), et où le casier (3) présente un orifice (34) ménagé dans sa paroi périphérique (31) et prévu pour être positionné en regard d'un port de connexion (23) du terminal électronique (2) une fois ce terminal électronique (2) introduit dans le casier (3), où le dispositif électronique interne (4) intègre un organe de connexion (42) raccordé à la carte électronique (41) et accessible au moins en partie dans ledit orifice (34), ladite coque (1) comprenant en outre un capuchon de connexion (5) amovible conformé pour être engagé de manière amovible dans ledit orifice (34), ledit capuchon de connexion (5) comportant :
- un premier connecteur (51) prévu pour s'engager dans le port de connexion (23) du terminal électronique (2) une fois ce terminal électronique (2) introduit dans le casier (3) et une fois ledit capuchon de connexion (5) placé dans ledit orifice (34) ; et
- un second connecteur (52) électriquement connecté au premier connecteur (51), et prévu pour être électriquement connecté à l'organe de connexion (42) une fois ledit capuchon de connexion (5) placé dans ledit orifice (34) ;
de sorte que, une fois le terminal électronique (2) introduit dans le casier (3) et le capuchon de connexion (5) placé dans ledit orifice (34), le terminal électronique (2) est électriquement connecté au dispositif électronique interne (4) via le premier connecteur (51), le second connecteur (52) et l'organe de connexion (42), pour permettre un échange de données entre la carte électronique (41) et le terminal électronique (2).

2. Coque (1) selon la revendication 1, dans laquelle le capuchon de connexion (5) présente une forme complémentaire de celle de l'orifice (34) pour un montage ajusté dudit capuchon de connexion (5) à l'intérieur dudit orifice (34).

3. Coque (1) selon les revendications 1 ou 2, dans laquelle l'orifice (34) se présente sous la forme d'un trou formé dans la paroi périphérique (31) du casier (3) ou d'une encoche formée dans la paroi périphérique (31) du casier (3) et ouverte sur un bord (310) de ladite paroi périphérique (31) opposé à la paroi de fond (30).

4. Coque (1) selon l'une quelconque des revendications précédentes, dans laquelle le capuchon de connexion (5) comporte un corps (50) supportant le premier connecteur (51) et le second connecteur (52) et enrobant des éléments de liaison électrique entre le premier connecteur (51) et le second connecteur (52).

5. Coque (1) selon la revendication 4, dans laquelle le corps (50) du capuchon de connexion (5) est réalisé dans un matériau identique au matériau constitutif du casier (3).

6. Coque (1) selon l'une quelconque des revendications précédentes, dans laquelle l'organe de connexion (42) comporte au moins une broche de connexion qui saille à l'intérieur de l'orifice (34) et qui est apte à établir un contact avec le second connecteur (52) du capuchon de connexion (5) une fois ledit capuchon de connexion (5) placé dans ledit orifice (34).

7. Coque (1) selon les revendications 4 et 6, dans laquelle le corps (50) du capuchon de connexion (5) présente au moins un trou (53) positionné en face du second connecteur (52), ledit trou (53) formant un passage pour une broche de connexion une fois ledit capuchon de connexion (5) placé dans l'orifice (34).

8. Coque (1) selon les revendications 6 ou 7, dans laquelle la ou chaque broche de connexion de l'organe de connexion (42) est du type broche rétractable, notamment du type lamelle ressort ou « pogo pin ».

9. Système électronique comprenant une coque (1) conforme à l'une quelconque des revendications précédentes, et un terminal électronique (2), notamment du type téléphone mobile, tablette numérique ou assistant numérique personnel, présentant un port de connexion (23), où ledit terminal électronique (2) est reçu à l'intérieur du casier (3) de la coque (1), et le capuchon de connexion (5) est placé dans l'orifice (34) de sorte que le premier connecteur (51) est engagé dans le port de connexion (23) du terminal électronique (2), et le second connecteur (52) est électriquement connecté à l'organe de connexion (42), établissant une connexion électrique entre le terminal électronique (2) et le dispositif électronique interne (4).
